# EUROPÄISCHE PATENTANMELDUNG

(11) **EP 1 039 617 A1**
(43) Veröffentlichungstag der Anmeldung: **27.09.2000**
(21) Anmeldenummer: 00106348.6
(22) Anmeldetag: 23.03.2000
(51) Int. Cl.: H02K 11/00, H02K 9/22

(54) **Elektrische Maschine, inbesondere Starter/Generator für ein Kraftfahrzeug**

(30) Priorität: 25.03.1999 DE 19913656
(71) Anmelder: Continental ISAD Electronic Systems GmbH & Co. KG, 86899 Landsberg (DE)
(72) Erfinder: Pels, Thomas, 77855 Achern (DE); Revermann, Klaus, 26835 Schwerinsdorf (DE)
(74) Vertreter: Lippich, Wolfgang, Dipl.-Pys., Dr.rer.nat.

(57) **Zusammenfassung**

Die Erfindung betrifft eine elektrische Maschine mit Läufer (8) und Ständer (9), wobei der Läufer (8) ein Wärmeabfuhrglied (24), insbesondere eine Wärmeabfuhrrippe aufweist, mit welchem vom Läufer (8) zum Ständer (9) hin abgeführt wird, und wobei das Wärmeabfuhrglied (24) durch seine Drehung eine zeitliche Veränderung eines Meßsignals hervorruft, aus der der Drehwinkel und/oder die Drehzahl des Läufers (8) relativ zum Ständer (9) bestimmt wird.

## Beschreibung

Die Erfindung betrifft eine elektrische Maschine, insbesondere einen Starter/Generator für ein Kraftfahrzeug.

Drehwinkel- und Drehzahlmeßvorrichtungen und -verfahren sind für elektrische Maschinen bekannt. So werden z.B. bei Gleichstrommaschinen induktive Drehwinkelgeber, bei Drehstrom-Maschinen Drehtransformatoren (sog. Resolver) oder auch Inkrementalgeber verwendet.

Beispielsweise ist aus der DE 32 30 607 C2 eine Vorrichtung zum Messen der Drehzahl einer elektrischen Maschine bekannt. Hierbei ist an einem wicklungsfreien Läufer der elektrischen Maschine ein Zahnkranz angeordnet, dem ein elektromagnetischer Sensor zugeordnet ist. Dieser mißt den Momentanwert der Drehzahl, und gibt ihn an eine Steuervorrichtung aus. Aus der WO97/08456 ist ein Starter/Generator in Form einer Asynchronmaschine mit einem Revolver bekannt.

Ferner ist es bekannt, zur Erhöhung der Kühlleistung bei elektrischen Maschinen einen oder mehrere Kühlkörper außen am Maschinengehäuse vorzusehen. Beispielsweise ist in dem Buch von G. Springer et al., "Fachkunde Elektrotechnik", Haan-Gruiten 1996, S. 329 eine elektrische Maschine beschrieben, an deren Gehäuseaußenfläche mehrere rippenförmige Kühlkörper angeordnet sind, die sich in Längsrichtung der elektrischen Maschine erstrecken. Aus der US-PS 4,958,095 ist es bekannt, zur Kühlung des Ständers einer als Starter/Generator dienenden elektrischen Maschine Luft durch das Innere der Maschine zu drücken. Hierdurch wird auch der Läufer gekühlt.

In der DE-OS 1513293 ist eine elektrische Maschine beschrieben, bei welcher ein Lüfterrad in Umfangsrichtung eingefräste Zähne aufweist. Diese dienen der Drehzahlerfassung. Zur Wärmeabfuhr sind am Lüfterrad separate Lamellen vorgesehen, die eine Kühlluftströmung erzeugen.

Der vorliegenden Erfindung liegt die Aufgabe zugrunde, eine verbesserte und mit verringertem Aufwand gestaltete elektrische Maschine, insbesondere zur Verwendung als Starter/Generator bei einem Kraftfahrzeug bereitzustellen.

Die Erfindung erreicht dies durch den Gegenstand des Anspruchs 1. Weitere vorteilhafte Ausführungen der Erfindung sind in den übrigen, abhängigen Ansprüchen beschrieben.

Danach stellt die Erfindung eine elektrische Maschine mit Läufer und Ständer bereit, wobei der Läufer ein Wärmeabfuhrglied, insbesondere eine Wärmeabfuhrrippe aufweist,
- mit welchem Wärme vom Läufer zum Ständer hin abgeführt wird,
- und wobei das Wärmeabfuhrglied durch seine Drehung eine zeitliche Veränderung eines Meßsignals hervorruft, aus der der Drehwinkel und/oder die Drehzahl des Läufers relativ zum Ständer bestimmt wird.

Es sind auch elektrische Maschinen mit zwei drehbaren Wirkeinheiten - also einem Läufer und einem drehbaren "Ständer" - bekannt (z. B. aus der DE 195 32 136 A1). Vorliegend soll der Begriff "Ständer" neben den üblichen feststehenden Ständern auch solche drehbaren Ständer umfassen.

Durch die Doppelfunktion des Wärmeabfuhrglieds als Wärmeabfuhr- und Drehbestimmungs-Bauteil ist die elektrische Maschine einfacher aufgebaut als eine entsprechende herkömmliche Maschine.

Bevorzugt bewirkt das Wärmeabfuhrglied die zeitliche Veränderung des Meßsignals durch Modulation eines Meßfelds. Alternativ ist z.B. auch denkbar, daß das Glied die zeitliche Veränderung des Meßsignals dadurch bewirkt, daß es selbst ein Meßfeld erzeugt. Z.B. kann das Glied als Permanentmagnet ausgestaltet sein, welcher aufgrund der Läuferdrehung ein zeitlich verändertes Meßsignal hervorruft, und welcher gleichzeitig Wärme vom Läufer zum Ständer hin abführt.

Vorzugsweise weist die elektrische Maschine eine Einrichtung zum Erzeugen des Meßfeldes und eine zum Empfangen des Meßfelds auf, wobei das Wärmeabfuhrglied derart ausgebildet ist, daß es das Meßfeld bei der Drehung des Läufers verändert.

Das Wärmeabfuhrglied dreht sich bevorzugt gemeinsam mit dem Läufer. Das Glied und der Läufer können zweiteilig, aber einstückig verbunden sein. Denkbar ist auch, daß das Glied integraler Bestandteil des Läufers ist.

Die Modulation des Meßfelds kann z.B. durch Transmission oder Reflexion bewirkt werden. Beispielsweise kann das Wärmeabfuhrglied bzw. die Wärmeabfuhrrippe ein Transponder sein, welcher das von der Meßfeld-Erzeugungseinrichtung erzeugte Meßfeld empfängt, und - geändert - wieder abstrahlt. Besonders bevorzugt ist das Glied ein passives Bauelement. Beispielsweise weist es Aussparungen oder reflektierende Stellen auf, um das Meßfeld zu modulieren.

Durch die Drehung des Glieds wird das Meßfeld in einer Weise verändert, daß durch diese Änderung der Drehwinkel und/oder die Drehzahl der elektrischen Maschine ermittelbar ist/sind. Hierzu ist das Glied vorzugsweise nahe bei der Einrichtung zum Erzeugen des Meßfeldes angeordnet, bzw. es gelangt im Verlauf der Läuferdrehung in deren Nähe.

Um zugleich die Wärmeabfuhrfunktion für den Läufer zu erfüllen, besteht das Glied vorteilhaft aus einem Material mit hoher Wärmeleitfähigkeit. Ferner ist es vorteilhaft so ausgebildet, daß seine Oberfläche relativ groß im Verhältnis zum Volumen ist. Dies kann z.B. durch Kühllamellen oder -rippen erreicht werden, die im Querschnitt relativ dünn sind.

Die elektrische Maschine ist vorteilhaft eine Drehstrom-Maschine in Synchron- oder Asynchronbauart.

Vorteilhaft ist die elektrische Maschine als kombinierter Starter für einen Kraftfahrzeug-Verbrennungsmotor und Generator des Kraftfahrzeuges ausgebildet. Besonders vorteilhaft handelt es sich um einen Kurbelwellen-Starter/Generator, also eine Maschine, die auf der Kurbelwelle des Verbrennungsmotors sitzt und permanent mit dieser dreht. Die Maschine kann mit gleicher Drehzahl wie der Verbrennungsmotor drehen oder, etwa durch Zwischenschaltung eines Planetengetriebes, über- oder untersetzt sein.

Die Erzeuger- und Empfängereinrichtungen für das Meßfeld sowie das Glied bzw. die Wärmeabfuhrrippe können zumindest teilweise im Bereich des drehmomenterzeugenden Magnetfeldes angeordnet sein. Bevorzugt ist dabei das Meßfeld mit einer charakteristischen Zeitabhängigkeit so gewählt, daß die Meßsignale - trotz etwaiger überlagerter vom drehmomenterzeugenden Feld der elektrischen Maschine herrührender Störsignale - in der Ermittlungseinrichtung identifiziert und herausgefiltert werden können. Selbst wenn die Störsignale die Meßsignale betragsmäßig um einige Größenordnungen übersteigen, unterscheiden sie sich z.B. in ihrer Frequenz und lassen sich deswegen diskriminieren.

Das Meßfeld kann grundsätzlich jede Art von elektromagnetischem Feld sein, welches vorteilhaft durch die Einwirkung des Glieds als Wärmeabfuhr-Drehbestimmungs-Bauteil in seiner Amplitude, Frequenz und/oder Phase beeinflußt wird. Bevorzugt ist das Meßfeld ein hochfrequentes magnetisches Wechselfeld, das durch ein Sendemittel (z. B. eine Sendespule) erzeugt, von der Wärmeabfuhr-Drehbestimmungs-Glied beeinflußt, und über ein in geeigneter Weise abgestimmtes Empfangsmittel (z. B. einer Empfangsspule) empfangen wird. Denkbar sind aber auch Ausgestaltungen, bei denen an Stelle einer Kombination von Sende- und Empfangsspule etwa ein Fotoemitter und ein Fotodetektor zum Erzeugen und Empfangen eines optischen Signals eingesetzt werden.

Bevorzugt weist das Wärmeabfuhr-Drehbestimmungs-Glied einen Modulator auf. Hierunter wird ein das Meßfeld mit der Läuferdrehung modulierender Teil des Glieds verstanden. Der übrige Teil des Wärmeabfuhr-Drehbestimmungs-Bauteils beeinflußt demgegenüber das Meßfeld nicht oder nur weniger stark mit der Läuferdrehung. Vorzugsweise sind beide Teile aus einem Stück gefertigt.

Das Glied besteht vorteilhaft aus einem Metall mit hoher Wärmeleitfähigkeit, insbesondere aus Aluminium. Vorzugsweise ist es im Aluminiumdruckgußverfahren gefertigt.

Vorteilhaft ist der Modulator zwischen der Sendespule und der Empfangsspule angeordnet. Er moduliert dann die Transmission des Meßfeldes. Bei anderen Ausgestaltungen, die mit optischer Abtastung arbeiten, ist neben der Möglichkeit der Transmissionsmodulation auch diejenige einer Reflexionsmodulation besonders vorteilthaft. Der Modulator liegt vorteilhaft am äußeren Umfang oder einer Seite des Läufers. Vorzugsweise ist er ringförmig, konzentrisch zur Drehachse des Läufers.

Neben der oben beschriebenen Wärmeabfuhr-Drehbestimmungs-Rippe sind vorzugsweise weitere Wärmeübertragungsrippen vorgesehen, die kammartig mit komplementären Rippen des Ständers ineinander greifen.

Zum Modulieren des Meßfelds weist der Modulator vorteilhaft Aussparungen in Form von Löchern oder Zähnen auf. Hieraus wird in Kenntnis der Modulatorstruktur, z.B. der Anzahl der Zähne und der Lage etwaiger Bezugsmarken, beispielsweise in Form eines besonders ausgestalten oder ausgelassenen Zahns, der Drehwinkel und/oder die Drehzahl der elektrischen Maschine ermittelt und Größen, wie z.B. Winkelgeschwindigkeit oder Winkelbeschleunigung abgeleitet. Bei Reflexionsmodulation weist der Modulator abwechselnd Bereiche mit größerer und kleinerer Reflektivität auf.

Klarstellend sei angemerkt, daß das Wärmeabfuhr-Drehbestimmungs-Glied aus mehreren Einzelteilen, z. B. mehreren Wärmeübertragungsrippen oder Teilen hiervon zusammengesetzt sein kann.

Die Erfindung wird nun durch Ausführungsbeispiele und die angefügte beispielhafte Zeichnung näher erläutert. In der Zeichnung zeigen:
- Fig. 1: eine unmaßstäblich-schematische Darstellung eines Antriebssystems mit einer elektrischen Maschine;
- Fig. 2: eine unmaßstäblich-schematische Darstellung einer Drehbestimmungsvorrichtung der elektrischen Maschine;
- Fig. 3: eine Draufsicht auf einen Ausschnitt eines Wärmeabfuhr-Drehbestirnmungs-Bauteils am Läufer der elektrischen Maschine;
- Fig. 4: ein Diagramm eines störungsbereinigten Meßsignalverlaufs;
- Fig. 5: einen Teilquerschnitt der elektrischen Maschine im Bereich des Umfangs des Läufers.

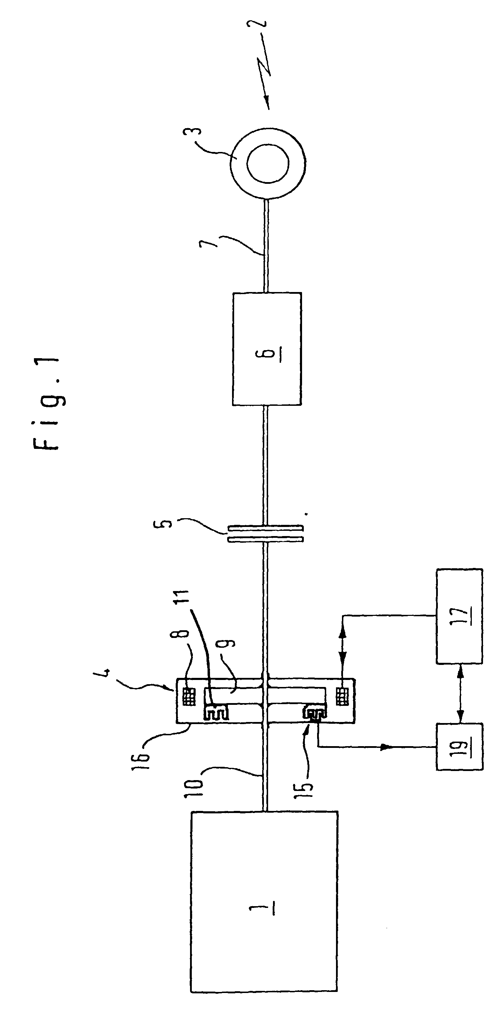

Das in Fig. 1 dargestellte Antriebssystem eines Kraftfahrzeugs, z.B. eines Personenkraftwages, weist als Antriebsaggregat einen Verbrennungsmotor 1 auf, bei dem es sich beispielsweise um einen Vierzylinder-Viertakt-Otto- oder einen Dieselmotor handelt. Das vom Verbrennungsmotor 1 erzeugte Drehmoment kann über einen Antriebsstrang 2 auf Antriebsräder 3 übertragen werden. In Antriebsrichtung ist im Antriebsstrang 2 nach dem Verbrennungsmotor 1 zunächst eine als Starter/Generator dienende elektrische Maschine 4 angeordnet. Auf diese folgen eine Fahrkupplung 5, ein Getriebe 6 und ein Achsantrieb 7, welcher das Drehmoment auf die Antriebsräder 3 überträgt.

Die elektrische Maschine 4 - hier eine Drehstrom-Wanderfeldmaschine in Asynchron- oder Synchron-Bauart - umfaßt einen Ständer 8 und einen Läufer 9. Ersterer stützt sich gegen den Verbrennungsmotor 1, ein (nicht gezeigtes) Fahrzeugchassis oder ein (nicht gezeigtes) Kupplungsgehäuse ab, wohingegen letzterer direkt auf einer Triebwelle (Kurbelwelle) 10 des Verbrennungsmotors 1 oder einer Verlängerung hiervon sitzt und mit dieser drehfest gekoppelt ist. Die Triebwelle 10 und der Läufer 9 rotieren hier gemeinsam, ohne Zwischenschaltung eines Getriebes.

Die elektrische Maschine 4 fungiert einerseits als Generator zum Laden einer Fahrzeugbatterie und zum Versorgen elektrischer Verbraucher, und ersetzt damit eine herkömmlicherweise im Fahrzeug vorhandene Lichtmaschine. Andererseits fungiert sie als Starter, der den Verbrennungsmotor 1 im Zusammenlauf aus dem Stand startet, und kann somit auch einen herkömmlicherweise beim Kraftfahrzeug gesondert vorgesehenen Starter ersetzen.

Die elektrische Maschine 4 ist außerdem mit einer Meßvorrichtung 15 zum Messen von Drehzahl und ggf. auch Drehwinkel des Läufers 9 ausgerüstet. Diese besteht aus einem feststehenden Teil 15a, der an einer Innenwand eines Gehäuses 16 der elektrischen Maschine 4 angebracht ist. Bei einer weiteren hier nicht dargestellten Variante ist die elektrische Maschine 4 unmittelbar hinter dem Verbrennungsmotor 1 angebracht, so daß der feststehende Teil 15a der Meßvorrichtung 15 auch direkt außen am Gehäuse des Verbrennungsmotors 1 angebracht sein kann.

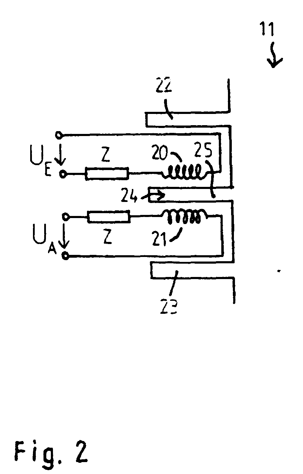

Desweiteren besteht die Meßvorrichtung 15 aus einem sich drehenden Teil, und zwar einer Meß- und Wärmeabfuhrrippe 24 eines ringförmigen Wärmeabfuhrkörpers 11 des Läufers 9. Die Meß- und Wärmeabfuhrrippe 24 wird im folgenden zur Vereinfachung als "Meßrippe 24" bezeichnet. Der Wärmeabfuhrkörper 11 samt Meßrippe 24 sind aus Aluminium ausgebildet. Nähere Details zur Meßvorrichtung 15 werden unten im Zusammenhang mit Fig. 2, 3 und 5 beschrieben.

Schließlich ist in Fig. 1 noch schematisch ein Wechselrichter 17 angedeutet, welcher den Wicklungen des Ständers 8 der elektrischen Maschine 4 bei einer Taktfrequenz von ca. 10 kHz-100 kHz sinusbewertete pulsweitenmodulierte Spannungsimpulse liefert, die unter der Wirkung der Maschineninduktivität im wesentlichen sinusförmige Dreiphasenströme in den Wicklungen des Ständers 8 ergeben.

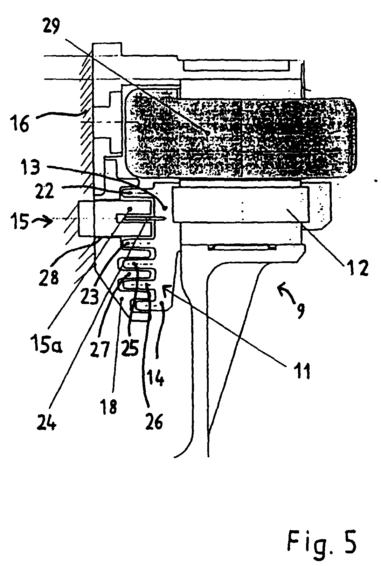

Gemäß Fig. 2 weist der feststehende Teil 15a der Meßvorrichtung 15 (der gemäß Fig. 1 und 5 innen am Gehäuse der elektrischen Maschine 4 befestigt und dem Läufer 9 zugewandt ist) eine Sendespule 20 und eine im Abstand davon im wesentlichen parallel ausgerichtete Empfangsspule 21 auf. Die Sendespule 20 erzeugt ein hochfrequentes magnetisches Wechselfeld (Meßfeld), welches in der Empfangsspule 21 eine dem Wechselfeld entsprechende Spannung induziert. Sende- und Empfangsspule 20, 21 sind demnach nach Art eines Transformators induktiv gekoppelt. Anstelle eines Eisenkernes, der bei einem Transformator vorhanden wäre, tritt jedoch das elektromagnetische Meßfeld über den zwischen Sende- und Empfangsspule 20, 21 befindlichen Luftspalt. Die Sendespule 20 wird mit einer hochfrequenten, rein sinusförmigen Spannung beaufschlagt. Die Frequenz der Eingangsspannung U_{E} beträgt z.B. 2 MHz und die Signalamplitude ca. 50 bis 60 Volt. Die Windungszahlen von Sendespule 20 und Empfangsspule 21 sind gleich, z.B. 72 Windungen. Dies entspricht einem Übersetzungsverhältnis von 1:1. Die Amplitude der in der Empfangsspule 21 induzierten Spannung hängt stark (exponentiell) von der Breite des Luftspaltes ab. Bei einer Breite von ca. 4 mm beläuft sich im vorliegenden Fall der Pegel der Ausgangsspannung U_{A} im Empfängerkreis auf ca. 10 bis 15 Volt. Um den Stromfluß sowohl im Schaltkreis der Sendespule 20 als auch im Schaltkreis der Empfangsspule 21 zu begrenzen, wird eine LC-Beschaltung mit Spule und Kondensator - also mit einem induktiven und kapazitiven Widerstand Z - vorgenommen. Das sinusförmige Grundsignal wird dann über diese LC-Beschaltung abgeglichen.

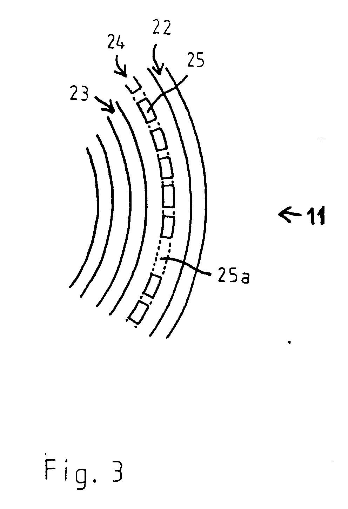

Die Meßrippe 24 ist gem. Fig. 3 an einer - der Sende- und Empfangsspule 20, 21 zugewandten - Seite des Wärmeabfuhrkörpers 11 angeordnet. Sie weist ca. 30 bis 50 seitlich vorstehende Zähne 25 auf, die über dem gesamten Umfang des Wärmeabfuhrkörpers 11 gleichmäßig verteilt sind. Lediglich für die Bestimmung des Drehwinkels ist mindestens eine Bezugsmarke 25a in Form eines ausgelassen Zahnes vorgesehen. Die Meßrippe 24 liegt zwischen zwei weiteren ringförmigen Wärmeabfuhrrippen 22, 23, die parallel zur Meßrippe 24 an der Seite des Wärmeabfuhrkörpers 11 über den gesamten Wärmeabfuhrkörperumfang verlaufend angeordnet sind.

Gem. Fig. 2 ist die Sendespule 20 zwischen der Meßrippe 24 und der äußeren der Kühlrippen 22 und die Empfangsspule 21 zwischen der inneren der Kühlrippen 23 und der Meßrippe 24 angeordnet. Diese liegt zwischen den feststehenden Sende- und Empfangsspulen 20, 21, wobei ihre Zähne 25 in den Luftspalt zwischen der Sende- und Empfangsspule 20, 21 hineinragen. Auf diese Weise wird das von der Sendespule 20 zur Empfangsspule 21 übertretende magnetische Meßfeld bei dazwischenliegendem Zahn 25 unterbrochen oder zumindest abgeschwächt; wenn jedoch eine Lücke zwischen zwei Zähnen dazwischenliegt, wird es nicht abgeschwächt. Die mit der Läuferdrehung erfolgende Drehung der Meßrippe 24 führt dann wiederholt zu Unterbrechungen des Meßfeldes, welche als Schwankung der in der Empfangsspule 21 induzierten Spannung U_{A} gemessen werden. Dieses Meßsignal wird vom feststehenden Teil 15a der Meßvorrichtung 15 gem. Fig. 1 zu einer Auswerteeinrichtung 19 übertragen.

Trotz der räumlichen Nähe der Meßvorrichtung 15 zum Ständer 8 und Läufer 9 und damit zu dem starken drehmomenterzeugenden Feld von Ständer 8 und Läufer 9 ist in der Auswerteeinrichtung 19 eine störsichere Ermittlung z.B. von Drehzahl und Momentandrehwinkel der elektrischen Maschine 4 gewährleistet: Das durch die Sendespule 20 erzeugte magnetische Meßfeld ist nämlich in einem Frequenzbereich gewählt, der erheblich oberhalb des Frequenzbereiches der mit den Erregerströmen der elektrischen Maschine 4 einhergehenden Feldern liegt. Die Frequenz des Meßfeldes beträgt ca. 2 MHz, während die Taktfrequenz des zuvor beschriebenen Wechselrichters 17 nur ca. 10-100 kHz und die Frequenz der sinusförmigen Ständer-Erregerströme nur ca. 1 kHz beträgt. Etwaige hieraus resultierende Störsignale können daher aufgrund der unterschiedlichen Frequenzbereiche gefiltert und somit die Meßsignale von etwaigen Störsignalen diskriminiert werden.

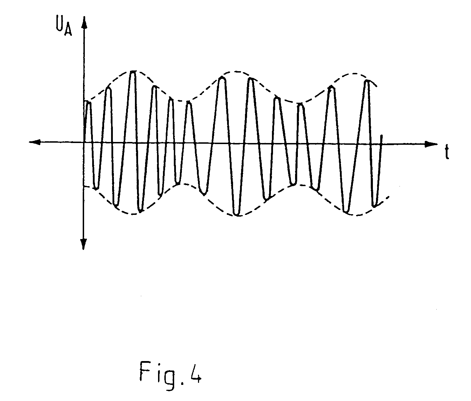

Die Form der an der Empfangsspule 21 erhaltenen und bereits störungsgefilterten Meßsignale zeigt Fig. 4. Aufgrund der Drehung der Meßrippe 24 wird das Meßfeld der Sendespule 20 und damit die Ausgangsspannung U_{A} amplitudenmoduliert: Die Amplitudenmaxima entsprechen einem vollen Durchlaß des Meßfeldes zwischen Sende- und Empfangsspule 20, 21, d.h. einer Zahnlücke der Meßrippe 24, während bei Amplitudenminima des Ausgangssignals U_{A}, das Meßfeld zwischen Sende- und Empfangsspule 20, 21 auf einen Zahn 25 trifft und daher abgeschwächt wird. Die Anzahl der Maxima (oder Minima) der gemessenen Ausgangsspannung U_{A} pro Zeiteinheit ist ein Maß für die Drehzahl der elektrischen Maschine 4. Der Momentandrehwinkel der elektrischen Maschine 4 ergibt sich aus dem Abstand der gemessenen Spannungsmaxima (oder Spannungsminima) zu der an der Meßrippe 24 vorgesehenen Zahnlückenbezugsmarke 25a. Die ermittelten Werte für Drehzahl und Momentandrehwinkel und/oder daraus abgeleitete Kenngrößen wie Winkelgeschwindigkeit oder Winkelbeschleunigung werden dann z. B. gern. Fig. 1 von der Auswerteeinrichtung 19 an den Wechselrichter 17 ausgegeben.

Gemäß Fig. 5 ist der Wärmeabfuhrkörper 11 an einer - dem feststehende Teil 15a der Meßvorrichtung 15 zugewandten - Seite des Läufers 9 über den gesamten Läuferumfang verlaufend angeordnet. Eine - dem feststehende Teil 15a der Meßvorrichtung 15 abgewandte - Seite eines radial äußeren Abschnitts 13 des Wärmeabfuhrkörpers 11 ist wärmeleitend mit einem Eisenpaket 12 des Läufers 9 verbunden, in dem der größte Teil der läuferseitigen Verlustwärme entsteht. Diesem liegt außenumfänglich ein zweites Eisenpaket 29 des Ständers 8 gegenüber.

Die Wärmeabfuhrrippen 22, 23, die Meßrippe 24, und weitere ringförmige Wärmeabfuhrrippen 25, 26 erstrecken sich in gleichen Abständen von der - dem feststehende Teil 15a der Meßvorrichtung 15 zugewandten - Seite des Wärmeabfuhrkörpers 11 nach außen. Die Wärmeabfuhrrippen 22, 23, 25 und 26 und der Wärmeabfuhrkörper 11 sind aus einem Stück gefertigt. Die Meßrippe 24 ist in eine über den Wärmeabfuhrkörperumfang verlaufende Aussparung im Wärmeabfuhrkörper 11 eingesetzt. Bei einer weiteren (nicht dargestellten) Ausgestaltung ist auch die Meßrippe 24 aus einem Stück mit dem Wärmeabfuhrkörper 11 hergestellt. Bei allen möglichen Ausgestaltungen steht die Meßrippe 24 in Wärmeleitungskontakt der Verlustwärmequelle des Läufers 9 - hier dem Eisenpaket 12 - über den Wärmeabfuhrkörper 11. Die Wärmeabfuhrrippen 22, 23, 25 und 26 und die Meßrippe 24 sind flach ausgebildet; ihre Erstreckung in Längsrichtung ist also wesentlich größer als ihre Dicke.

Der feststehende Teil 15a der Meßvorrichtung 15 und ein feststehender Wärmeabfuhrkörper 18, der zum Wärmeabfuhrkörper 11 des Läufers 9 komplementär ausgebildet ist, sind wärmeleitend mit dem Gehäuse 16 der elektrischen Maschine 4 verbunden. Der Teil 15a umgreift die Meßrippe 24 zangenförmig, wobei in einer Zangenhälfte die Sendespule 20 und in dem anderen die Empfangsspule 21 angeordnet ist.

Der zweite Wärmeabfuhrkörper 18 weist ringförmige Rippen 27 auf, die in die Zwischenräume zwischen den Wärmeabfuhrrippen 22, 23, 25 und 26 des Läufers 9 eingreifen. Auch die beiden Zangen des Teils 15a der Meßvorrichtung 15 sind ringförmig ausgebildet, greifen also über den gesamten Umfang in die Zwischenräume zwischen der Meßrippe 24 und den benachbarten Wärmeabfuhrippen 22 und 23 ein. Der meßtechnisch aktive Teil der Meßvorrichtung 15 ist auf eine Stelle des Umfangs beschränkt; die ringförmige Erstreckung des Teils 15a dient also der Wärmeübertragung, ist aber für die Messung nicht erforderlich.

Die Wärmeübertragung vom drehenden Teil 11 auf den feststehenden Wärmeübertragungsteil 18 erfolgt berührungsfrei. Durch die geringen Abstände zwischen den Oberflächen der Rippen der beiden Teile und die große Fläche der sich gegenüberstehenden Rippenoberflächen wird trotz der fehlenden direkten Wärmeleitung ein guter Wärmeübergang erzielt, und zwar einerseits durch Wärmeleitung und Zwangskonvektion der zwischen den Rippenoberflächen befindlichen Luft, und andererseits durch Wärmestrahlung. Bei dieser Art von "berührungsfreien Wärmeleitungskühlung" ist keine weitere Kühlung des Läufers erforderlich. Der den Läufer aufnehmende Innenraum der elektrischen Maschine kann daher vollständig gekapselt, ohne Durchtritt von Kühlluft o. ä., ausgebildet sein. Die zum Ständer geleitete Wärme kann z.B. durch eine Flüssigkeitskühlung oder durch Luftkühlung der Gehäuseaußenfläche abgeführt werden.

Die Meßrippe 24 ist dabei voll in die Wärmeübertragung vom Läufer auf den Ständer einbezogen, erfüllt also die im Anspruch 1 angegebene Doppelfunktion. Bei (nicht gezeigten) Ausführungsformen können die Läufer-Kühlrippen 22, 23, 25 und 26 entfallen, für die Wärmeübertragung sorgt hier allein die Meßrippe 24 zusammen mit dem Teil 15a der Meßrichtung 15.

## Patentansprüche

1. Elektrische Maschine, insbesondere Starter/Generator für ein Kraftfahrzeug,
mit Läufer (8) und Ständer (9), wobei der Läufer (8) ein Wärmeabfuhrglied (24), insbesondere eine Wärmeabfuhrrippe, aufweist,
- mit welchem Wärme vom Läufer (8) zum Ständer (9) hin abgeführt wird,
- und wobei das Wärmeabfuhrglied (24) durch seine Drehung eine zeitliche Veränderung eines Meßsignals hervorruft, aus der der Drehwinkel und/oder die Drehzahl des Läufers (8) relativ zum Ständer (9) bestimmt wird.

2. Elektrische Maschine nach Anspruch 1, bei welcher das Wärmeabfuhrglied (24) die zeitliche Veränderung des Meßsignals durch Modulation eines Meßfelds bewirkt.

3. Elektrische Maschine nach Anspruch 2, bei welcher das Wärmeabfuhrglied (24) die Modulation des Meßfelds aufgrund von Transmission oder Reflexion bewirkt.

4. Elektrische Maschine nach Anspruch 2 oder 3, bei welcher das Meßfeld ein hochfrequentes magnetisches Wechselfeld ist.

5. Elektrische Maschine nach einem der Ansprüche 2 bis 4, bei welcher das Wärmeabfuhrglied (24) zum Modulieren des Meßfeldes Aussparungen oder reflektierende Stellen aufweist.

6. Elektrische Maschine nach einem der vorhergehenden Ansprüche, bei welcher das Wärmeabfuhrglied (24) am äußeren Umfang oder an einer Seite des Läufers (8) ausgebildet ist.

7. Elektrische Maschine nach einem der vorhergehenden Ansprüche, bei welcher das Wärmeabfuhrglied (24) ringförmig ausgebildet ist.

8. Elektrische Maschine nach einem der vorhergehenden Ansprüche, bei welcher das Wärmeabfuhrglied (24) aus Aluminium hergestellt ist.

9. Elektrische Maschine nach einem der vorhergehenden Ansprüche, bei welcher das Wärmeabfuhrglied (24) zwischen weiteren Wärmeabfuhrgliedern (22, 23, 25, 26), insbesondere zwischen weiteren Wärmeabfuhrrippen angeordnet ist.

10. Elektrische Maschine nach einem der vorhergehenden Ansprüche, bei welcher mehrere kammartig ineinandergreifenden Wärmeabfuhrglieder, insbesondere mehrere Wärmeabfuhrrippen vorgesehen sind, die teils am Läufer (8), teils am Ständer (9) angeordnet sind, und sich bei Drehung des Läufers (8) nicht berühren.
